# EUROPEAN PATENT APPLICATION

(11) **EP 3 470 700 A1**
(43) Date of publication of application: **17.04.2019**
(21) Application number: 16904701.6
(22) Date of filing: 16.12.2016
(51) Int. Cl.: F16D 65/00, F16D 55/228

(54) **DISC BRAKE DEVICE**

(30) Priority: 10.06.2016 JP 2016115842
(71) Applicant: Akebono Brake Industry Co., Ltd., Tokyo 103-8534 (JP)
(72) Inventor: MATSUDA, Taro, Tokyo 103-8534 (JP); NOGUCHI, Tetsuya, Tokyo 103-8534 (JP)
(74) Representative: Grünecker Patent- und Rechtsanwälte PartG mbB
(86) International application number: PCT/JP2016/087495
(87) International publication number: WO 2017/212668

(57) **Abstract**

On the inside of a caliper (22) configuring a disc brake device (1a), a hollow arcuate wear debris-scattering prevention cover (20) is set. A circumferential portion of a rotor (5) is disposed inside said wear debris-scattering prevention cover (20). During braking, by advancing an inner pad (21a) and an outer pad (21b) inward through pad insertion holes (44a) of the wear debris-scattering prevention cover (20), the sliding contact parts of the rotor (5) with said inner pad (21a) and outer pad (21b) are positioned inside the wear debris-scattering prevention cover (20). As a result, scattering of wear debris into the surroundings is prevented.

## Description

### Technical Field

The present invention relates to a disc brake device.

### Background Art

As a brake device for braking an automobile, a disc brake device typified by a floating type disc brake device or an opposed piston type disc brake device is widely used since it is excellent in heat dissipation and can finely adjust a braking force at the time of traveling. The floating type disc brake device among them has a structure in which a caliper is supported so that the caliper can be displaceable in an axial direction with respect to a support which supports a pair of pads so as to be movable in the axial direction, and a cylinder and a piston are provided at only one side of a rotor in the caliper. In contrast, the opposed piston type disc brake device has a structure in which a pair of pads are supported so as to be movable in the axial direction with respect to a caliper fixed to a vehicle body, and the pads are pressed toward a rotor via a plurality of pistons provided in a mutually facing state on the caliper.

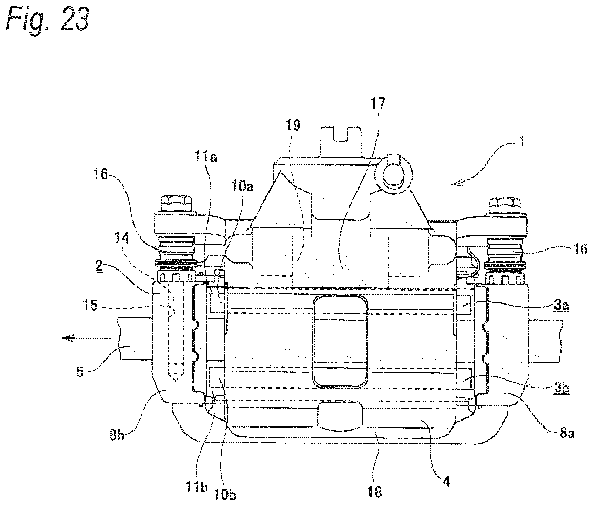

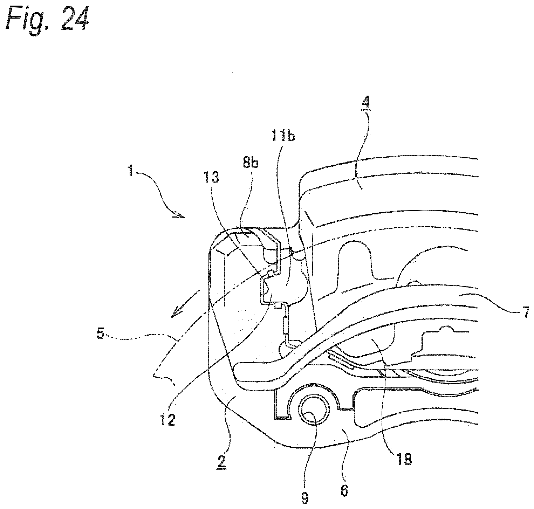

Figs. 23 to 24 show an example of a conventional structure of a floating type disc brake device described in Patent Document 1 of the two types of disc brake devices.

Incidentally, in the present specification and claims, unless otherwise noted, "an axial direction", "a circumferential direction", and "a radial direction" refer to an axial direction, a circumferential direction, and a radial direction of a rotor. Further, a rotation-in side refers to a side in which the rotor rotating with a vehicle wheel enters a caliper when the vehicle moves forward, and a rotation-out side refers to a side in which the rotor gets out of the caliper.

A disc brake device 1 which is shown includes a support 2, a pair of pads 3a, 3b, and a caliper 4.

The support 2 is configured such that an inner side portion 6 arranged at an inner side of a rotor 5 rotating together with a vehicle wheel (not shown) and an outer side portion 7 arranged at an outer side of the rotor 5 are connected by a pair of connecting arm portions 8a, 8b arranged at both circumferential end portions so as to straddle the rotor 5. The support 2 having the above configuration is fixed to a suspension device such as a knuckle by inserting a bolt (not shown) through a mounting hole 9 formed in a radially inner side portion of the inner side portion 6.

The pair of pads 3a, 3b are respectively configured by linings 10a, 10b and pressure plates 11a, 11b, and supported so as to be movable in the axial direction with respect to the support 2 in a state of facing both side surfaces of the rotor 5. Therefore, convex locking protruding pieces 12 formed at both circumferential end portions of the pressure plate 11b (11a) are respectively engaged with concave torque receiving portions 13 formed at both circumferential end portions of the support 2.

The caliper 4 is supported so as to be displaceable in the axial direction with respect to the support 2. Therefore, a pair of guide pins 14 provided at both circumferential end portions of the caliper 4 are inserted into a pair of guide holes 15 provided in the connecting arm portions 8a, 8b configuring the support 2 so as to be slidable in the axial direction. Dustproof boots 16, 16 are provided between outer peripheral surfaces of base end portions of the pair of guide pins 14 and opening portions of the pair of guide holes 15. In a state of straddling the pair of pads 3a, 3b, the caliper 4 includes a cylinder portion 17 at the inner side and a pawl portion 18 at the outer side. A piston 19 configured to press the pad 3a on the inner side against an inner side surface of the rotor 5 is fitted liquid-tightly in the cylinder portion 17.

In order to perform braking with the disc brake device 1 having the above-described configuration, pressure oil is fed into the cylinder portion 17, and the pad 3a at the inner side is pressed against the inner side surface of the rotor 5 by the piston 19. Then, due to counteraction of a pressing force, the caliper 4 is displaced toward the inner side, and the pawl portion 18 presses the pad 3b at the outer side against an outer side surface of the rotor 5. As a result, the rotor 5 is strongly clamped from both sides thereof by the pair of pads 3a, 3b to perform braking.

When braking a vehicle with the disc brake device 1 having the above-described configuration, it is known that abrasion powder is generated along with sliding contact between the inner and outer side surfaces (both axial side surfaces) of the rotor 5 and the linings 10a, 10b configuring the pads 3a, 3b. In recent years, from the growing awareness of environmental conservation, it begins to be considered that abrasion powder generated from the disc brake device is suppressed from scattering to the atmosphere, and a burden on the environment is reduced (refer to Patent Document 2). Patent Document 2 discloses a structure which prevents the abrasion powder from scattering to surroundings by covering a disc brake device and the entire rotor with a cover. However, in a case of such a conventional structure, although it is effective for preventing the abrasion powder from scattering, it is inevitable to increase in a size of the device since it is necessary to use a large-sized cover. It is difficult to cool the disc brake device arranged in the cover, so that it is possible to cause deterioration in brake performance.

Incidentally, a problem of scattering of the abrasion powder as described above is not limited to a floating type disc brake device but may also similarly occurs in an opposed piston type disc brake device.

### Prior Art Document

### Patent Document

Patent Document 1: JP-A-2007-10072
Patent Document 2: JP-A-2008-196684

### Summary of the Invention

### Problems to be Solved by the Invention

In view of the above circumstances, the present invention has been made to realize a structure of a disc brake device capable of suppressing abrasion powder generated at the time of braking from scattering to surroundings without causing an increase in size of the device and deterioration in brake performance.

### Means for Solving the Problems

The above object of the present invention is achieved by a disc brake device having the following configurations (1) to (13).
(1) There is provided a disc brake device including:
   a caliper including at least one cylinder and arranged in a state of straddling a rotor rotating together with a vehicle wheel;
   a piston fitted in the cylinder so as to be displaceable in an axial direction; and
   a pad arranged in a state of facing an axial side surface of the rotor and pressed against the axial side surface of the rotor as the piston is pushed out,
   wherein an abrasion powder scattering prevention cover configured to prevent abrasion powder generated along with sliding contact between the rotor and the pad from scattering is provided inside the caliper.

   Incidentally, the case of "providing the abrasion powder scattering prevention cover inside the caliper" includes not only a case where the entire abrasion powder scattering prevention cover is arranged inside the caliper but also a case where a part of the abrasion powder scattering prevention cover is arranged inside the caliper (a case where the abrasion powder scattering prevention cover protrudes from the caliper).
   Further, "the abrasion powder" includes not only abrasion powder generated by scraping a lining configuring the pad, but also abrasion powder generated by scraping a side surface of the rotor.
(2) The disc brake device according to the above (1), wherein the abrasion powder scattering prevention cover covers at least a part of a periphery of the pad (friction surface) at least at the time of braking.
(3) The disc brake device according to the above (2), wherein the abrasion powder scattering prevention cover covers a peripheral surface (outer peripheral surface or inner peripheral surface) of the pad.
(4) The disc brake device according to the above (3), wherein the abrasion powder scattering prevention cover covers the rotor from a radial outer side.
(5) The disc brake device according to any one of the above (1) to (4), wherein the abrasion powder scattering prevention cover is also provided at a portion which is displaced from the pad in a circumferential direction.
(6) The disc brake device according to any one of the above (1) to (5), wherein at least a part of the abrasion powder scattering prevention cover is provided in a state of facing the axial side surface of the rotor.
(7) The disc brake device according to the above (6), wherein a space is provided between the part of the abrasion powder scattering prevention cover which faces the axial side surface of the rotor and a portion of the caliper which is positioned on an opposite side to the rotor with the facing portion in the axial direction interposed.
   In a state of implementing the present invention, for example, the abrasion powder scattering prevention cover is formed into a hollow shape (for example, a hollow thin-walled bow shape) capable of accommodating a part of the rotor inside thereof.
   The hollow abrasion powder scattering prevention cover is provided with pad insertion holes for inserting the pads (entire pad or only lining) in the axial direction at both axial side surfaces thereof.
(8) The disc brake device according to any one of the above (1) to (7), wherein the abrasion powder scattering prevention cover is provided with a discharge port configured to discharge the abrasion powder inside to the outside.
   In a state of implementing the present invention described in the above (8), for example, the discharge port is provided at a rotation-out side portion in the circumferential direction of the abrasion powder scattering prevention cover.
   The discharge port is provided at a radially inner side portion or a radially outer side portion of the abrasion powder scattering prevention cover.
   Further, a passage configured to introduce (guide) abrasion powder toward the discharge port is provided in the abrasion powder scattering prevention cover.
   In this case, a space partitioned (delimited) by a wall provided in a state of extending toward the discharge port can be the passage.
   Furthermore, the wall can be configured by a side surface, a step surface, or the like of a protrusion.
(9) The disc brake device according to any one of the above (1) to (8), wherein the abrasion powder scattering prevention cover elastically urges a part of the pad.
   In this case, by the abrasion powder scattering prevention cover, an outer peripheral surface of the pad can be urged, and a circumferential end portion of the pad can also be urged.
(10) The disc brake device according to any one of the above (1) to (9), wherein the abrasion powder scattering prevention cover is supported and fixed to a member that supports the pad so as to be movable in the axial direction.
   Specifically, when the disc brake device of the present invention is a floating type disc brake device, a support corresponds to a member for supporting the pad so as to be movable in the axial direction. When the disc brake device of the present invention is an opposed piston type disc brake device, a caliper corresponds to a member for supporting the pad so that the pad is movable in the axial direction.
   At least one of, for example, a screwing mechanism, an engaging mechanism and a fitting mechanism can be selectively adopted as a fixing mechanism of the abrasion powder scattering prevention cover.
(11) The disc brake device according to any one of the above (1) to (10), wherein the abrasion powder scattering prevention cover is made of a material harmless to a human body. In this case, for example, the abrasion powder scattering prevention cover is made of bio-soluble fibers.
(12) The disc brake device according to any one of the above (1) to (11), further including:
   a suction device configured to suck the abrasion powder and connected to the abrasion powder scattering prevention cover,
   wherein the suction device includes a fan portion which generates a suction force by negative pressure caused by rotating, and a drive portion which rotationally drives the fan portion, and
   wherein the drive portion rotationally drives the fan portion by using rotation of a wheel configuring the vehicle wheel.
(13) The disc brake device according to the above (12), wherein the drive portion includes a drive roller rotated by an inner peripheral surface of the wheel, and a speed increasing mechanism (for example, a belt type speed increasing mechanism, a chain type speed increasing mechanism, a gear type speed increasing mechanism, or the like) for increasing the rotation of the drive roller and transmitting the rotation to the fan portion.

Incidentally, it is possible to adopt a configuration in which the drive roller can be elastically pressed against an inner peripheral surface of the wheel.

It is also possible to adopt a configuration in which the fan portion is supported via a one-way clutch and the fan portion is rotated only when a rotation direction of the wheel is a direction of moving a vehicle forward.

Further, it is also possible to adopt a configuration in which air discharged from the suction device is sent (discharged) toward the disc brake device.

Alternatively, a configuration may be adopted in which the abrasion powder in the abrasion powder scattering prevention cover may be fed into a recovery portion (for example, a filter, a powder separation portion (cyclone), and a labyrinth structure portion (maze structure portion)) or a discharge port provided at an inner side or an outer side of the abrasion powder scattering prevention cover by using airflow generated by travelling wind of the vehicle and the rotation of the vehicle wheel (rotor) without using a suction force due to the above-described suction device.

### Effect of the Invention

According to the disc brake device of the present invention having the above-described configuration, the abrasion powder generated at the time of braking can be suppressed from scattering to the surroundings without causing an increase in size of the disc brake device and deterioration in brake performance.

That is to say, in the present invention, since the abrasion powder scattering prevention cover is provided inside the caliper arranged in the state of straddling the rotor, the abrasion powder scattering prevention cover can prevent (suppress) the abrasion powder generated along with the sliding contact between the side surface of the rotor and the pad at the time of braking from scattering to the surroundings.

In the present invention, since it is only necessary to provide the abrasion powder scattering prevention cover inside the caliper and it is unnecessary to provide a member such as a cover covering the entire disc brake device to prevent the abrasion powder from scattering, an increase in size of the disc brake device can be prevented. Further, since it is unnecessary to cover the entire disc brake device, cooling performance of the disc brake device can be ensured, and deterioration in the brake performance can be prevented.

As described above, according to the disc brake device of the present invention, the abrasion powder generated at the time of braking can be suppressed from scattering to the surroundings without causing an increase in size of the device and deterioration in the brake performance.

### Brief Description of Drawings

Fig. 1 is an orthographic view showing an opposed piston type disc brake device of a first embodiment of the present invention as viewed from an inner side in a state of being assembled around a rotor.
Fig. 2 is a perspective view showing a state where the opposed piston type disc brake device shown in Fig. 1 is viewed from an outer side and a radial outside.
Fig. 3 is a perspective view showing a state where the opposed piston type disc brake device shown in Fig. 1 is viewed from the inner side and a radial inside.
Fig. 4 is a schematic sectional view taken along a line A-A of Fig. 1.
Fig. 5 is a sectional view taken along a line B-B of Fig. 4, with the rotor omitted.
Fig. 6 is a view corresponding to Fig. 5, with an abrasion powder scattering prevention cover omitted.
Fig. 7 is a front view showing the abrasion powder scattering prevention cover shown in Fig. 5 taken out.
Fig. 8 is a perspective view of the abrasion powder scattering prevention cover shown in Fig. 7.
Fig. 9 is a partially cut-away perspective view showing a state in which a suction device shown in Fig. 1 is taken out and viewed from the inner side.
Fig. 10 is a perspective view showing a state in which the suction device shown in Fig. 1 is taken out and viewed from the outer side.
Fig. 11 is a view showing a second embodiment of the present invention and corresponding to Fig. 5.
Fig. 12 is a view showing a third embodiment of the present invention and corresponding to Fig. 5.
Fig. 13 is a perspective view showing a state where an opposed piston type disc brake device of a fourth embodiment of the present invention is viewed from an outer side and a radial outside.
Fig. 14 is a sectional view of the opposed piston type disc brake device shown in Fig. 13 corresponding to Fig. 4.
Fig. 15 is a sectional view of the opposed piston type disc brake device shown in Fig. 13 corresponding to Fig. 5.
Fig. 16 is a front view showing an abrasion powder scattering prevention cover shown in Fig. 15 taken out.
Fig. 17 is a perspective view of the abrasion powder scattering prevention cover shown in Fig. 16.
Fig. 18 is a view showing a first element configuring the abrasion powder scattering prevention cover shown in Fig. 17 taken out, wherein Fig. 18(a) is a front view, Fig. 18(b) is a right side view, Fig. 18(c) is a plan view, and Fig. 18(d) is a perspective view.
Fig. 19 is a view showing a second element configuring the abrasion powder scattering prevention cover shown in Fig. 17, wherein Fig. 19(a) is a front view, Fig. 19(b) is a right side view, Fig. 19(c) is a plan view, Fig. 19(d) is a perspective view as viewed from an axially outer side, and Fig. 19E is a perspective view as viewed from an axially inner side.
Fig. 20 is a perspective view showing a state where an opposed piston type disc brake device of a fourth embodiment of the present invention is viewed from an outer side and a radial outside.
Fig. 21 is a front view showing an abrasion powder scattering prevention cover shown in Fig. 20 taken out.
Fig. 22 is a perspective view showing a state where the abrasion powder scattering prevention cover shown in Fig. 21 is viewed from an inner side.
Fig. 23 is a plan view showing a floating type disc brake device having a conventional structure.
Fig. 24 is a front view omitting a right half of the floating type disc brake device shown in Fig. 23.

### Description of Embodiments

### [First Embodiment]

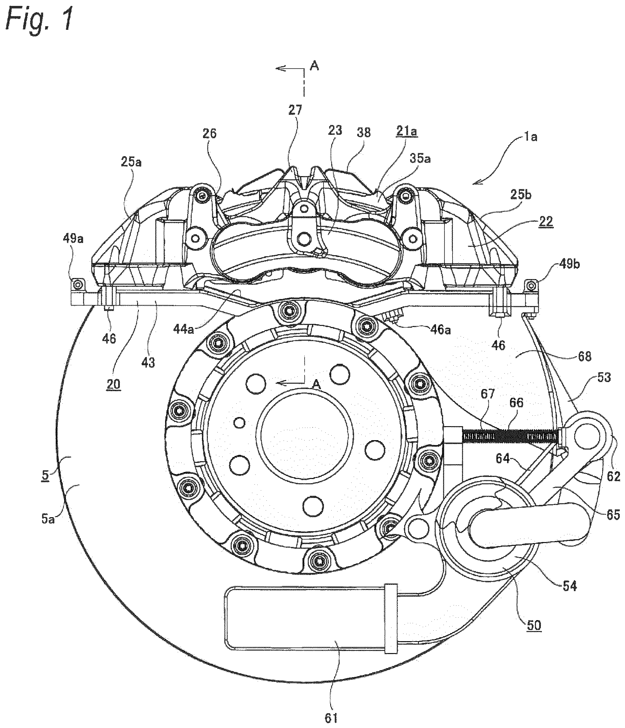

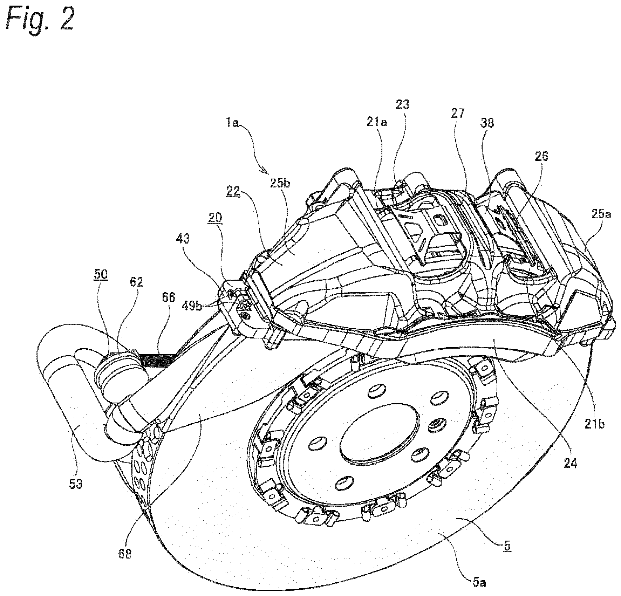

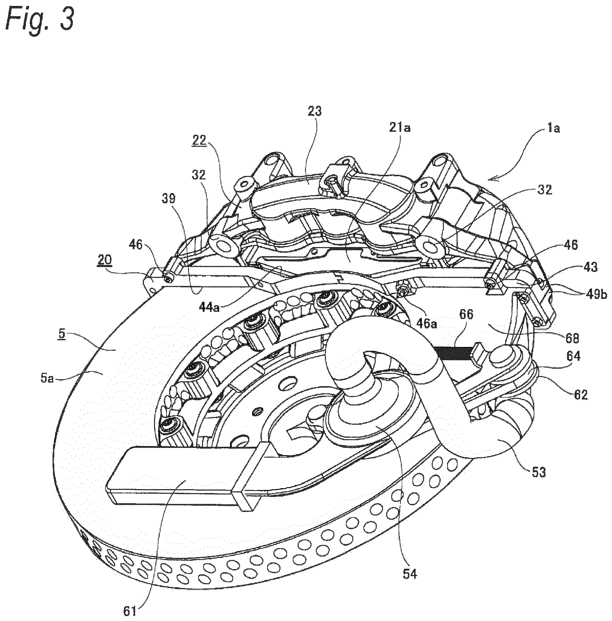

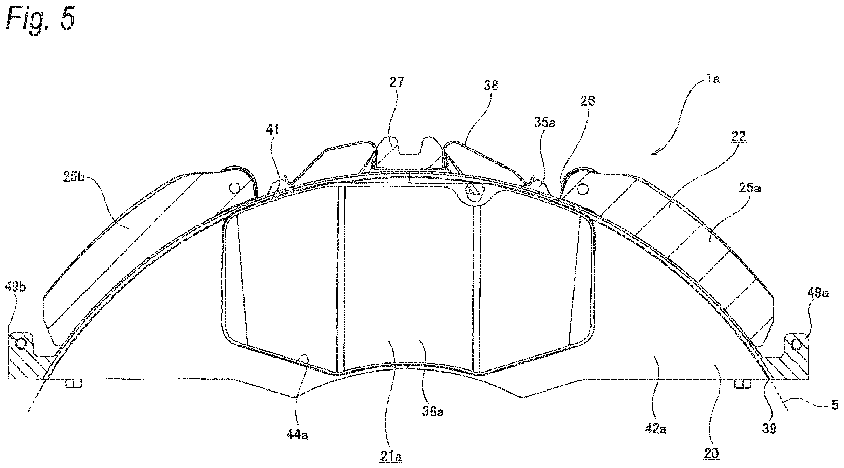

A first embodiment of the present invention will be described with reference to Figs. 1 to 10. In the first embodiment, a case will be described, in which an abrasion powder scattering prevention cover 20 for preventing abrasion powder (brake dust) from scattering to surroundings of an opposed piston type disc brake device 1a is provided at the disc brake device 1a.

In the disc brake device 1a of the first embodiment, a disc-like rotor 5 rotating together with a vehicle wheel is clamped from both sides thereof in an axial direction (a front-rear direction of Fig. 1) by an inner pad 21a arranged at an inner side of the rotor 5 and an outer pad 21b arranged at an outer side of the rotor 5 so as to exert a braking force. The inner pad 21a and the outer pad 21b are supported so as to be movable in the axial direction by a caliper 22 arranged so as to straddle a circumferential part of the rotor 5 from a radially outer side.

The caliper 22 is made of a metal such as an aluminum alloy, and includes an inner body portion 23 and an outer body portion 24 provided on the inner and outer sides of the rotor 5, and a pair of connection portions 25a, 25b which respectively connects an end portion at one circumferential side (in a left side of Fig. 1, a rotation-in side when a vehicle moves forward) of the inner body portion 23 and the outer body portion 24 and an end portion at the other circumferential side (in a right side of Fig. 1, a rotation-out side when a vehicle moves forward) thereof. Further, a portion surrounded by the inner body portion 23, the outer body portion 24, and the connection portions 25a, 25b is a window portion 26 having a substantially rectangular shape in a plan view. At a circumferential central portion of the window portion 26, circumferential intermediate portions of the inner body portion 23 and the outer body portion 24 are connected by a central bridge portion 27 provided radially outward than an outer circumferential edge of the rotor 5. The window portion 26 is divided in two parts in the circumferential direction by the central bridge portion 27.

Three inner cylinders 28 and three outer cylinders 29 are respectively provided in the inner body portion 23 and the outer body portion 24 (a total of six cylinders in the entire caliper 22). Further, an inner piston 30 and an outer piston 31 are respectively fitted in the each of the inner cylinders 28 and each of the outer cylinders 29 so as to be oil-tight and displaceable in the axial direction. The caliper 22 is supported and fixed to a vehicle body side (a knuckle of a suspension device) by a pair of mounting seats 32, 32 provided at the inner body portion 23.

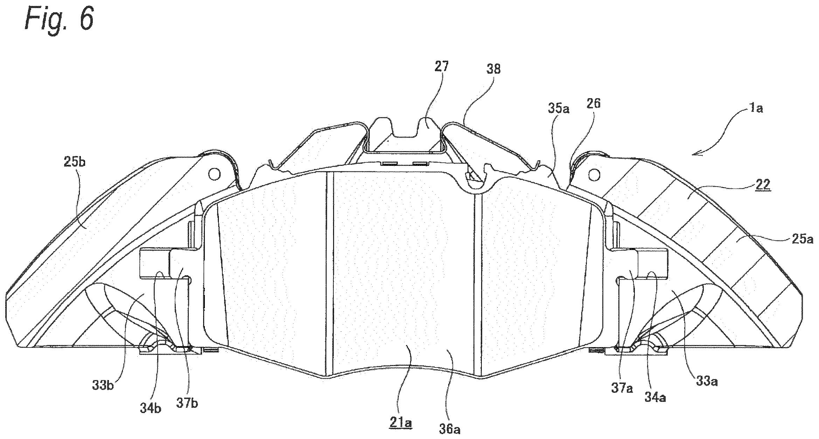

As shown in Fig. 6, a pair of guide wall portions 33a, 33b projecting toward an inner side in the axial direction are respectively provided on both circumferential end portions of mutually facing inner surfaces (axially inner side surface) of the inner body portion 23 and the outer body portion 24. Guide recessed grooves 34a, 34b which are respectively opened at the axially inner side surface and a circumferential side surface are provided on radially intermediate portions of the pair of guide wall portions 33a, 33b.

The inner pad 21a and the outer pad 21b include pressure plates (back plate) 35a, 35b made of metal, and linings (friction member) 36a, 36b respectively fixed to surfaces (surfaces facing the rotor 5) of the pressure plates 35a, 35b. A pair of convex ear portions 37a, 37b protruding from both circumferential sides are respectively provided at radially intermediate portions of both circumferential side edge portions of the pressure plates 35a, 35b. Further, the ear portions 37a, 37b are respectively engaged with the guide recessed grooves 34a, 34b so as to be displaceable in the axial direction.

Pad clips made of metal plates such as stainless steel plates are provided between the both circumferential side edge portions of each of the pressure plates 35a, 35b and circumferential side surfaces of the guide wall portions 33a, 33b. Accordingly, rusting of slide-contact portions between each of the pressure plates 35a, 35b and the guide wall portion 33a, 33b is prevented, and the occurrence of abrasion at the slide-contact portions is suppressed.

Further, a pad spring 38 made of a metal plate such as a stainless steel plate is provided at a portion between the inner pad 21a, the outer pad 21b and the central bridge portion 27 configuring the caliper 22. The pad spring 38 presses outer circumferential edge portions of the both circumferential end side portions of the pressure plates 35a, 35b toward radially inward. Accordingly, the inner pad 21a and the outer pad 21b are prevented from rattling with respect to the caliper 22 at the time of non-braking.

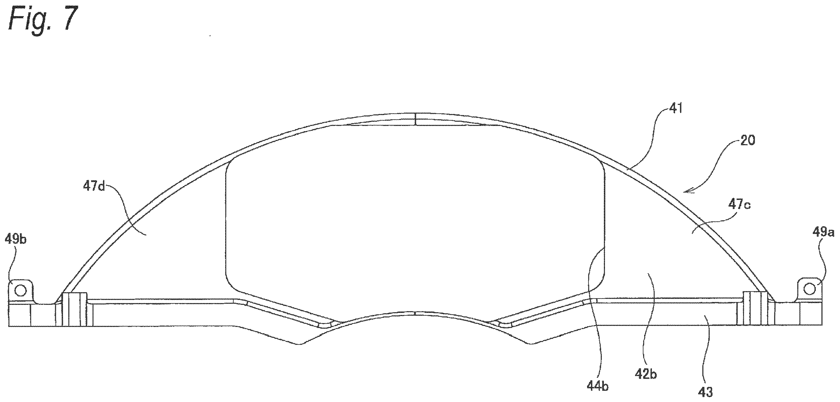

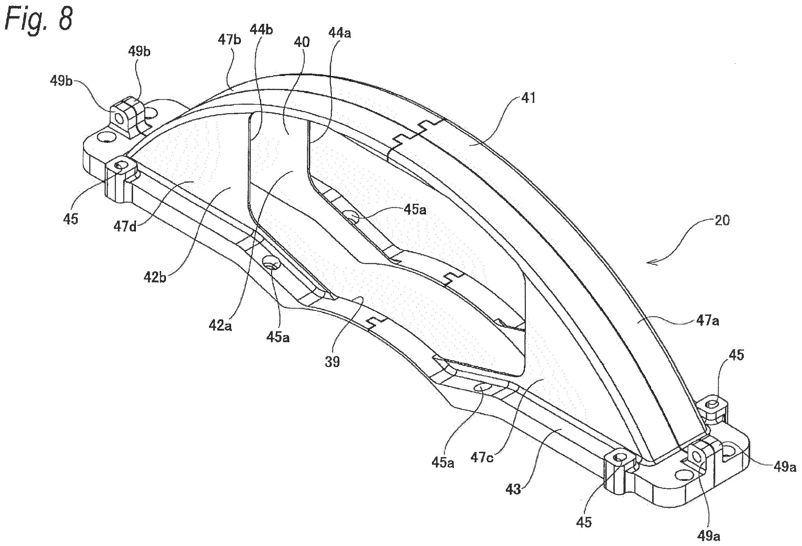

In particular, in the first embodiment, as shown in Figs. 7 and 8, the abrasion powder scattering prevention cover 20 is provided inside of the caliper 22 having the above-described configuration. The abrasion powder scattering prevention cover 20 is made of a metal such as an aluminum alloy, is formed into a hollow thin-walled bow shape (a semicylindrical shape) as a whole, and is symmetrical with respect to the circumferential direction and the axial direction. The abrasion powder scattering prevention cover 20 having the hollow shape includes an opening portion 39 having a rectangular shape on a radially inner end portion thereof, and can accommodate a circumferential part (about one-third) of a sliding portion 5a of the rotor 5 through the opening portion 39. Therefore, a width dimension in the axial direction of an accommodating space 40 (opening portion 39) in the inner side of the abrasion powder scattering prevention cover 20 is set slightly larger than a thickness dimension in the axial direction of the sliding portion 5a of the rotor 5. The abrasion powder scattering prevention cover 20 is provided in a state of projecting to on both circumferential sides of the inner pad 21a and the outer pad 22.

The abrasion powder scattering prevention cover 20 includes a radially outer cover portion 41, a pair of axial opposed walls 42a, 42b, and a mounting flange portion 43.
The radially outer cover portion 41 constitutes an outer peripheral surface of the abrasion powder scattering prevention cover 20, and is curved into a convex circular-arc shape along an outer peripheral surface of the sliding portion 5a of the rotor 5. The radially outer cover portion 41 is arranged along inner peripheral surfaces of the connection portions 25a, 25b and an inner peripheral surface of the central bridge portion 27 in a state where the abrasion powder scattering prevention cover 20 is fitted to the caliper 22, and a circumferential intermediate portion thereof is exposed to the outside from the window portion 26. A clearance is provided between an inner peripheral surface of the radially outer cover portion 41 and an outer peripheral surface of the rotor 5.

Each of the axial opposed walls 42a, 42b constitutes an axial side surface of the abrasion powder scattering prevention cover 20, and is formed into a bow shape (partially circular shape). In the state where the abrasion powder scattering prevention cover 20 is fitted to the caliper 22, the axial opposed walls 42a, 42b are respectively arranged at inner sides of the inner body portion 23 and the outer body portion 24 such that clearances (space) are interposed between axially inner side surfaces of the inner body portion 23 and the outer body portion 24, and the axial opposed walls 42a, 42b. That is to say, spaces are provided between portions (the axial opposed walls 42a, 42b) of the abrasion powder scattering prevention cover 20 which face axial side surfaces of the rotor 5 and portions (axially inner side surfaces of the inner body portion 23 and the outer body portion 24) of the caliper 22 which are positioned on opposite sides to the rotor 5 with the facing portions in the axial direction interposed.

Further, pad insertion holes 44a, 44b having substantially rectangular shapes penetrating in the axial direction are respectively formed in circumferential intermediate portions of the axial opposed walls 42a, 42b. Each of the pad insertion holes 44a, 44b has a shape matching (slightly larger than) the outline of each of the linings 36a, 36b, and the respective linings 36a, 36b can be inserted (advanced and retreated) in the axial direction therethrough.

The mounting flange portion 43 is a portion which supports and fixes the abrasion powder scattering prevention cover 20 to the caliper 22, and is provided in a state of projecting to a circumferential edge portion of the opening portion 39. A plurality of mounting holes 45, 45 (four in the shown example) penetrating in the radial direction are provided in the vicinity of four corner portions of the mounting flange portion 43. Further, fixing screws 46, 46 inserted through the mounting holes 45, 45 from a radially inner side to outer side are screwed and tightened to radially inner end portions of the inner body portion 23 and the outer body portion 24. Accordingly, the abrasion powder scattering prevention cover 20 is screwed and fixed to the caliper 22. In this state, in the abrasion powder scattering prevention cover 20, most of the radially outer cover portion 41 and the pair of axial opposed walls 42a, 42b are positioned on the inner side of the caliper 22, whereas the mounting flange portion 43 protrudes to a radially inner side and both circumferential sides from the caliper 22 (exposed to the outside from the caliper 22).

Although the overall configuration of the abrasion powder scattering prevention cover 20 is as described above, such abrasion powder scattering prevention cover 20 is configured by combining four cover elements 47a to 47d. That is to say, a pair of cover elements 47a and 47b at the inner side which is combined (in concave/convex engagement) in the circumferential direction and a pair of cover elements 47c and 47d at the outer side which is combined in the circumferential direction are combined (superposed) in the axial direction. Further, by screwing and fixing a pair of coupling pieces 49a, 49b provided in portions configuring circumferential end portions of the mounting flange portion 43, the four cover elements 47a to 47d are combined so as to configure the abrasion powder scattering prevention cover 20.

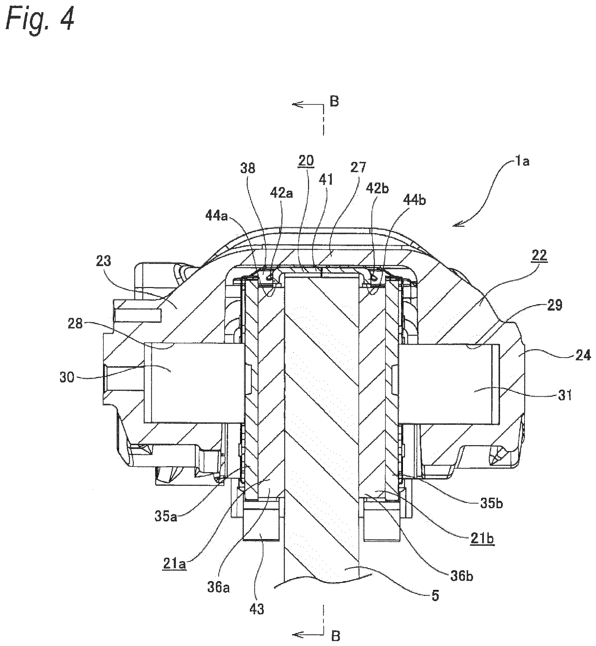

In a state where the abrasion powder scattering prevention cover 20 is fitted to the inner side of the caliper 22, the abrasion powder scattering prevention cover 20 covers a part (a portion positioned inside the caliper 22) of the rotor 5 in either of the non-braking case and the braking case. Specifically, the radially outer cover portion 41 configuring the abrasion powder scattering prevention cover 20 covers a part of the rotor 5 from a radially outer side, and the pair of axial opposed walls 42a, 42b cover a part of the rotor 5 from both axial sides. In contrast, the abrasion powder scattering prevention cover 20 covers the linings 36a, 36b configuring the inner pad 21a and the outer pad 21b only when braking. Specifically, a circumferential intermediate portion of the radially outer cover portion 41 configuring the abrasion powder scattering prevention cover 20 covers outer peripheral surfaces of axially inner end portions of the linings 36a, 36b from the radially outer side, and both circumferential end portions of the radially outer cover portion 41 cover circumferential side surfaces of the axially inner end portions of the linings 36a, 36b from both circumferential sides. On the contrary, at the time of non-braking, the linings 36a, 36b are positioned outside the abrasion powder scattering prevention cover 20 and are not covered with the abrasion powder scattering prevention cover 20. Therefore, in the first embodiment, as shown in Fig. 4, at the time of braking, when the inner pad 21a and the outer pad 21b are brought close to the rotor 5 as the inner piston 30 and the outer piston 31 are pushed out, the axially inner end portions (tip end portions) of the linings 36a, 36b respectively enter the pad insertion holes 44a, 44b (in the accommodating space 40), whereas at the time of non-braking, the linings 36a, 36b are got out of the pad insertion holes 44a, 44b to an axially outer side.

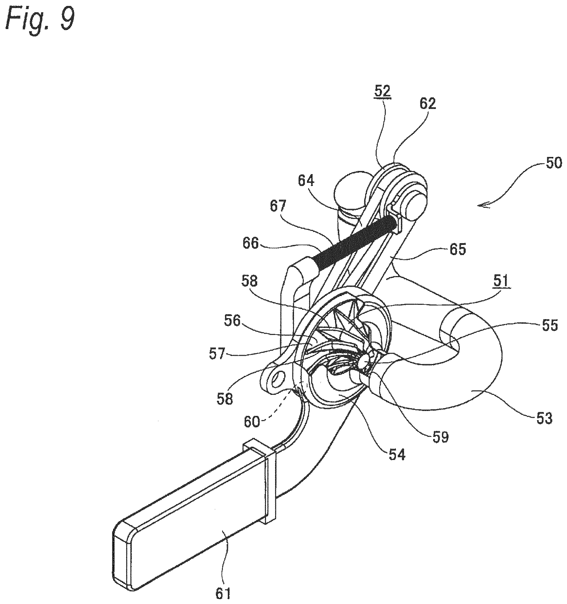

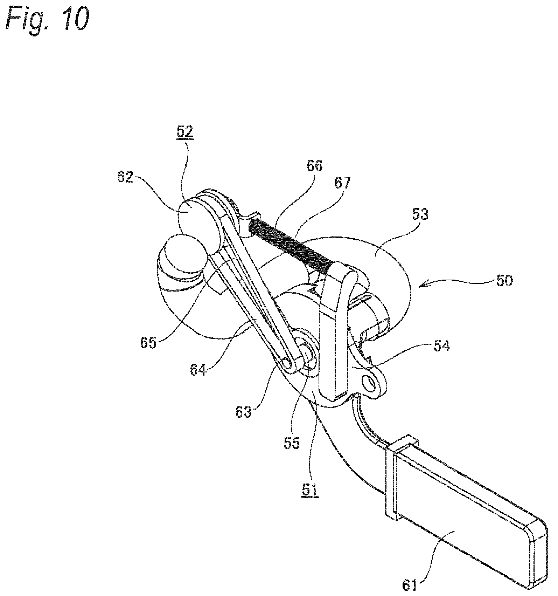

In the first embodiment, as shown in Figs. 9 and 10, a suction device 50 is connected to the above-described abrasion powder scattering prevention cover 20. The suction device 50 is configured to suck abrasion powder in the accommodating space 40, arranged at the inner side of the rotor 5, and supported and fixed to the knuckle. The suction device 50 includes a fan portion 51 which generates a suction force by negative pressure caused by rotating, and a drive portion 52 which rotationally drives the fan portion 51, and is connected to the abrasion powder scattering prevention cover 20 via a suction duct 53.

The fan portion 51 includes a support shaft 55 which is rotatably supported to an inner side of a housing portion 54 fixed to the knuckle via a rolling bearing, and an impeller 56 which is supported around the support shaft 55 via a one-way clutch.

The one-way clutch can transmits a rotational force between the support shaft 55 and the impeller 56 only when the support shaft 55 tends to rotate relative to the impeller 56 in the same direction as a rotation direction of a vehicle wheel at the time of forward movement of a vehicle. On the contrary, when the support shaft 55 tends to rotate relative to the impeller 56 in a direction opposite to the rotation direction of the vehicle wheel at the time of forward movement of a vehicle (for example, when rotating in the rotation direction at the time of backward movement of a vehicle), the impeller 56 runs idle with respect to the support shaft 55.

The impeller 56 includes a disc-like substrate portion 57 and a plurality of blades 58, 58 provided at an axial side surface of the substrate portion 57. The blades 58, 58 are arranged at equal intervals in the circumferential direction in a state of being curved into a spiral shape (an involute curved shape) from a central portion of the substrate portion 57 toward a radially outer side. When the impeller 56 having the above configuration rotates in a predetermined direction, negative pressure is generated in the central portion of the substrate portion 57. Therefore, a suction force in the axial direction directed to the central portion of the substrate portion 57 is generated, and the sucked air is discharged to the radially outer side. Accordingly, in the first embodiment, on the housing portion 54 in which the impeller 56 is accommodated, a portion facing the central portion of the substrate portion 57 in the axial direction is provided with a housing suction port 59 to which an base end portion of the suction duct 53 is connected. A housing discharge port 60 is provided on a portion of the housing portion 54 radially facing a part of an outer peripheral surface of the impeller 56, and a recovery portion 61 including a filter or the like capable of collecting abrasion powder inside is connected to the housing discharge port 60. Accordingly, in the first embodiment, air discharged from the housing discharge port 60 passes through the filter, so that the abrasion powder is recovered (captured).

The drive portion 52 includes a drive roller 62, a driven roller 63, and a belt 64, and constitutes a belt type speed increasing mechanism (speed increasing mechanism).

The drive roller 62 is rotatably supported to a tip end portion of a swing arm portion 65 supported so as to be swingably displaceable around a point on a center axis of the support shaft 55, and is elastically pressed against an inner peripheral surface of a wheel (rim portion) (not shown) configuring the vehicle wheel. Therefore, an expansion arm 66 whose entire length is extendable extending in the radial direction (radiation direction) of the rotor 5 is provided with respect to the housing portion 54, and a tip end portion thereof is connected to the tip end portion of the swing arm portion 65. Accordingly, a resilient force exerted by a spring 67 configuring the expansion arm 66 elastically presses the drive roller 62 toward the inner peripheral surface of the wheel while swinging the swing arm portion 65. According to the above configuration, the drive roller 62 is rotated (power is applied) by the inner peripheral surface of the wheel as the wheel rotates.

The driven roller 63 is configured to have a sufficiently smaller diameter than the drive roller 62, and is non-rotatably fixed to an end portion of the support shaft 55 protruding to the outside from the housing portion 54.

The belt 64 has flexibility, is formed into an annular shape (endless shape) as a whole, and is bridged between an outer peripheral surface of the drive roller 62 and an outer peripheral surface of the driven roller 63. The belt 64 transmits rotation of the drive roller 62 to the driven roller 63. Since a diameter of the driven roller 63 is smaller than a diameter of the drive roller 62, a rotational speed of the driven roller 63 is made faster (increased) than a rotational speed of the drive roller 62 according to a ratio of these diameters. Incidentally, an inner peripheral surface of the belt 64 and the outer peripheral surfaces of the drive roller 62 and the driven roller 63 can be brought into friction contact, and can also be in concavo-convex engagement with each other.

The suction duct 53 is bent into a substantially U shape from the base end portion connected to the housing suction port 59, and is made of a pipe-like (hollow cylindrical shape) member provided in a state of extending toward the outer peripheral surface of the rotor 5. Further, a tip end portion of the suction duct 53 is connected to a radially inner end portion of a rotation-out side half portion of the abrasion powder scattering prevention cover 20 via a connection attachment 68. The connection attachment 68 has a shape capable of accommodating a part of the sliding portion 5a of the rotor 5 at an inner side thereof, and is connected to the tip end portion of the suction duct 53 at an outer peripheral surface thereof. Besides, the connection attachment 68 is screwed and fixed to the radially inner end portion of the rotation-out side half portion of the abrasion powder scattering prevention cover 20 with a plurality of fixing screws 46, 46a. Specifically, by respectively using the fixing screws 46, 46 inserted through the mounting holes 45, 45 provided in the vicinity of the four corner portions of the mounting flange portion 43 configuring the abrasion powder scattering prevention cover 20, and the fixing screws 46a, 46a inserted through the two mounting holes 45a, 45a positioned at the rotation-out side among the four mounting holes 45a, 45a provided on a circumferential central side portion, the connection attachment 68 is supported and fixed to the abrasion powder scattering prevention cover 20.

In the disc brake device 1a of the first embodiment having the above-described configuration, at the time of braking, pressure oil is respectively fed into the inner cylinder 28 and the outer cylinder 29, and the inner piston 30 and the outer piston 31 are pushed out of the inner cylinder 28 and the outer cylinder 29. Accordingly, the inner pad 21a and the outer pad 21b are displaced in the axial direction so as to approach the rotor 5. Further, the axially inner end portions of the linings 36a, 36b respectively enter the pad insertion holes 44a, 44b of the abrasion powder scattering prevention cover 20, and axially inner end surfaces (friction surface) of the linings 36a, 36b are pressed against both axial side surfaces of the sliding portion 5a of the rotor 5. As a result, the sliding portion 5a is strongly clamped from both axial sides thereof to perform braking. Furthermore, at the time of braking, although abrasion powder is generated along with sliding contact between the axially inner end surfaces of the linings 36a, 36b and the both axial side surfaces of the sliding portion 5a of the rotor 5, according to the disc brake device 1a of the first embodiment, it is possible to effectively prevent the abrasion powder in this way from scattering to the surroundings.

In the first embodiment, the abrasion powder scattering prevention cover 20 is provided inside the caliper 22. Further, the abrasion powder scattering prevention cover 20 covers a part of the rotor 5, and covers the axially inner end portions of the linings 36a, 36b at the time of braking. Therefore, the abrasion powder scattering prevention cover 20 can cover slide-contact portions (the slide-contact portion is positioned inside the abrasion powder scattering prevention cover 20) between the axially inner end surfaces of the linings 36a, 36b and the both axial side surfaces of the sliding portion 5a of the rotor 5, which is a generation position of the abrasion powder. The abrasion powder scattering prevention cover 20 can cover (shield) an inner surface of the caliper 22 (the axially inner side surfaces of the inner body portion 23 and the outer body portion 24 and the inner peripheral surfaces of the connection portions 25a, 25b). Accordingly, regardless of airflow or the like accompanying the rotation of the rotor 5, for example, it is possible to effectively prevent abrasion powder from scattering radially outward from the window portion 26 of the caliper 22 or entering into the axially inner side surfaces of the inner body portion 23 and the outer body portion 24, and the abrasion powder can be stored (temporarily) in the abrasion powder scattering prevention cover 20. Since the size of each of the pad insertion holes 44a, 44b is set to be slightly larger than that of each of the linings 36a, 36b, the abrasion powder in the abrasion powder scattering prevention cover 20 can be effectively prevented from scattering to the outside from portions between the pad insertion holes 44a, 44b and the linings 36a, 36b.

Further, in the first embodiment, abrasion powder in the abrasion powder scattering prevention cover 20 is sucked by the suction device 50 connected to the abrasion powder scattering prevention cover 20, and recovered in the recovery portion 61. Specifically, the suction device 50 operates as follows to suck abrasion powder in the abrasion powder scattering prevention cover 20.

At first, when a wheel configuring a vehicle wheel rotates in a predetermined direction in association with forward travel of a vehicle, the drive roller 62 elastically pressed against the inner peripheral surface of the wheel rotates. The rotation of the drive roller 62 is transmitted to the driven roller 63 via the belt 64 so as to rotate the support shaft 55 which fixes the driven roller 63 to the end portion thereof. Then, the rotation of the support shaft 55 is transmitted to the impeller 56 via the one-way clutch to rotate the impeller 56. Accordingly, negative pressure is generated in the housing portion 54 so that abrasion powder in the abrasion powder scattering prevention cover 20 is sucked into the housing portion 54 via the connection attachment 68 and the suction duct 53 and is then discharged toward the recovery portion 61. Further, the abrasion powder discharged toward the recovery portion 61 is recovered (collected) by a filter or the like in the recovery portion 61.

As described above, in the first embodiment, by providing the abrasion powder scattering prevention cover 20, not only abrasion powder can be prevented from scattering to the surroundings, but also the abrasion powder in the abrasion powder scattering prevention cover 20 which is prevented from scattering to the surroundings can be recovered by using the suction device 50. As a result, a burden on the environment due to abrasion powder generated at the time of braking can be sufficiently reduced. Contamination on a wheel caused by adhesion of abrasion powder can be effectively prevented.

In the first embodiment, as compared with for example, the case of covering the entire disc brake device, since the abrasion powder scattering prevention cover 20 is arranged a position close to the slide-contact portion, which is a generation position of abrasion powder, the abrasion powder can be sucked by the suction device 50 before widely scattered (dispersed). Therefore, a suction effect of the suction device 50 can be increased. Beside, since the impeller 56 is rotated using the rotation of the wheel having a large diameter and the drive portion 52 having a speed increasing function is used, a rotational speed of the impeller 56 can be sufficiently increased. In addition, in the first embodiment, when a rotational speed of a wheel (and the support shaft 55) decreases in association with braking operation of a driver, the connection of the one-way clutch is disconnected so that the impeller 56 continues to rotate due to inertia and maintains a high rotational speed. Therefore, during braking at which abrasion powder is generated, it is possible to prevent the suction force from decreasing as a traveling speed of the vehicle decreases, and to effectively suck the abrasion powder.

Further, in the first embodiment, since the tip end portion of the suction duct 53 (the connection attachment 68) is connected to a rotation-out side portion of the abrasion powder scattering prevention cover 20 at which the abrasion powder is easy to concentrate (move) due to airflow or the like accompanying the rotation of the rotor 5, the generated abrasion powder can be efficiently sucked by the suction device 50.

In the disc brake device 1a of the first embodiment, unlike the conventional structure, since it is unnecessary to provide a member such as a cover covering the entire disc brake device to prevent abrasion powder from scattering, an increase in size of the device can be prevented. Since it is unnecessary to cover the entire disc brake device, cooling performance of the disc brake device is not impaired, and deterioration in the brake performance can be prevented. In the first embodiment, since clearances (space) are respectively interposed between the axially inner side surfaces of the inner body portion 23 and the outer body portion 24 and the axial opposed walls 42a, 42b, heat (radiant heat) of the rotor 5 is less likely to be transmitted to the inner body portion 23 and the outer body portion 24. Further, when releasing the brake, since the inner pad 21a and the outer pad 21b are moved to the outer side of the abrasion powder scattering prevention cover 20, the inner pad 21a and the outer pad 21b can also be prevented from being heated to a high temperature.

As described above, according to the disc brake device 1a of the first embodiment, abrasion powder generated at the time of braking can be suppressed from scattering to the surroundings without causing an increase in size of the device and deterioration in brake performance.

Although not shown, it is also possible to adopt a configuration in which air (the air after abrasion powder is recovered) discharged from the suction device 50 (recovery portion 61) is fed toward an inner side of a rotation-in side portion of the abrasion powder scattering prevention cover 20. By adopting such a configuration, it is possible to efficiently cool the disc brake device 1a, and to utilize the abrasion powder to be concentrated at the rotation-out side portion of the abrasion powder scattering prevention cover 20. The recovery portion for recovering abrasion powder can also adopt a powder separation portion (cyclone) that separates abrasion powder by centrifugal separation by passing through a flow path in which a spiral airflow is generated, and a labyrinth structure portion (maze structure portion) that separates abrasion powder at a portion, where a flow velocity is low, by passing through a meandering flow path. Further, as the suction device, for example a suction device which is electrically driven by an electric motor or the like can also be used. In this case, a suction amount (suction force) of the suction device can also be changed according to a depression amount of a brake pedal.

The abrasion powder scattering prevention cover 20 is not limited to being made of a metal, but may be made of synthetic resins excellent in heat resistance, or bio-soluble fibers (bio-soluble inorganic fiber) harmless to a human body which are more easily worn than the linings 36a, 36b and have characteristics of being decomposed in a short time and being discharged to the outside of the human body even when taken in the human body. Bio-soluble ceramic fibers such as SiO₂-CaO-MgO-based fibers and SiO₂-CaO-MgO-Al₂O₃-based fibers, bio-soluble rock wool or the like can be used as such bio-soluble fibers. Examples of commercial products include ROCK WOOL RB220-Roxu1000 (manufactured by Lapinus B.V.), FINE FLEX-E BULK FIBER-T (Nichias Corporation), BIOSTAR BULK FIBER (manufactured by ITM Co., Ltd.), or the like.

As a fixing mechanism for fixing the abrasion powder scattering prevention cover to the caliper, not only a screwing mechanism using a screw but also an engagement mechanism such as engaging an engaging convex portion and an engaging concave portion by concavo-convex engagement can be adopted, and various known methods such as a fitting mechanism such as fitting a fitting convex portion into a fitting concave portion and an adhesion mechanism can also be adopted. It is also possible to adopt a combination of the plurality of methods. The abrasion powder scattering prevention cover is not limited to a structure in which a plurality of elements are combined, but it can also be formed as an integral structure. Further, the abrasion powder scattering prevention cover can be provided integrally with the connection attachment.

### [Second Embodiment]

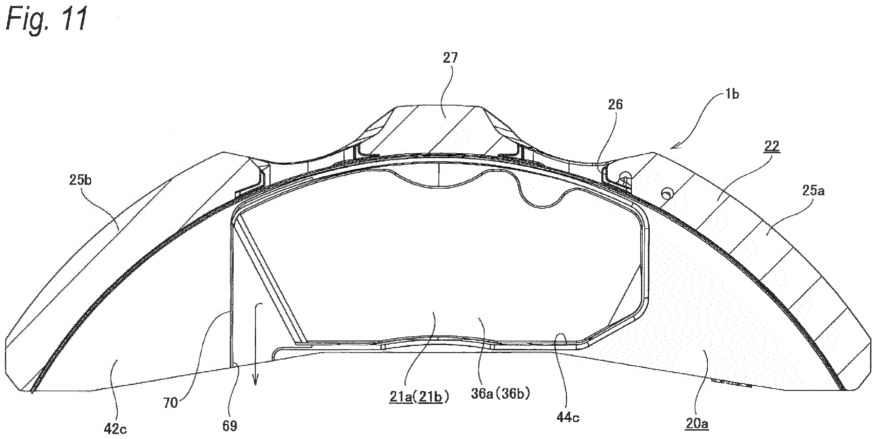

A second embodiment of the present invention will be described with reference to Fig. 11. A disc brake device 1b of the second embodiment is characterized in that a cover discharge port 69 configured to discharge abrasion powder in an abrasion powder scattering prevention cover 20a to the outside is provided on a radially inner end portion of a rotation-out side portion of the abrasion powder scattering prevention cover 20a, and the abrasion powder in the abrasion powder scattering prevention cover 20a is introduced to the cover discharge port 69.

In the second embodiment, a protrusion 70 having a substantially C shape in a front view, which protrudes axially inward and has a discontinuous portion at one position in the circumferential direction, is formed on an axially inner side surface of each of a pair of axial opposed walls 42c configuring the abrasion powder scattering prevention cover 20a at a portion which surrounds a periphery of a pad insertion hole 44c. The discontinuous portion of the protrusion 70 is provided at a radially inner end portion of a portion adjacent to a rotation-out side of the pad insertion hole 44c, and this portion serves as the cover discharge port 69.

In the second embodiment having the above-described configuration, abrasion powder which is generated at the slide-contact portion (refer to Fig. 1 or the like) between the lining 36a (36b) configuring the pad 21a (21b) and the rotor 5, and is scattered toward the rotation-out side by airflow or the like accompanying the rotation of the rotor 5 is introduced to the cover discharge port 69 by an inner side face of the protrusion 70. More specifically, the abrasion powder generated at the slide-contact portion can be prevented from leaking to an outer side of the protrusion 70, and can be efficiently introduced to the cover discharge port 69 by moving the abrasion powder along the inner side surface of the protrusion 70 (a passage which is a space partitioned by the inner side surface of the protrusion 70 is moved in an arrow direction). Incidentally, it is preferable that a protrusion amount (a height in the axial direction) of the protrusion 70 inward in the axial direction is increased within a range in which an axially inner end portion of the protrusion 70 does not contact the axial side surface of the rotor 5. However, in a case where the protrusion 70 is made of bio-soluble fibers harmless to a human body, the axially inner end portion of the protrusion 70 can also be made close to such an extent that it comes into contact with the axial side surface of the rotor 5.

In the second embodiment having the above-described configuration, by connecting the tip end portion of the suction duct described in the first embodiment to the cover discharge port 69, abrasion powder in the abrasion powder scattering prevention cover 20a can be effectively removed.

Incidentally, the structure for guiding abrasion powder is not limited to the structure in which the protrusions are provided on the inner side surfaces of the axial opposed walls. For example, a step portion may be formed instead of the protrusion, and a side surface (step surface) of the step portion can also be used, or a part of the inner surface of the caliper can also be directly used.

Other configurations and operational effects are the same as those in the first embodiment.

### [Third Embodiment]

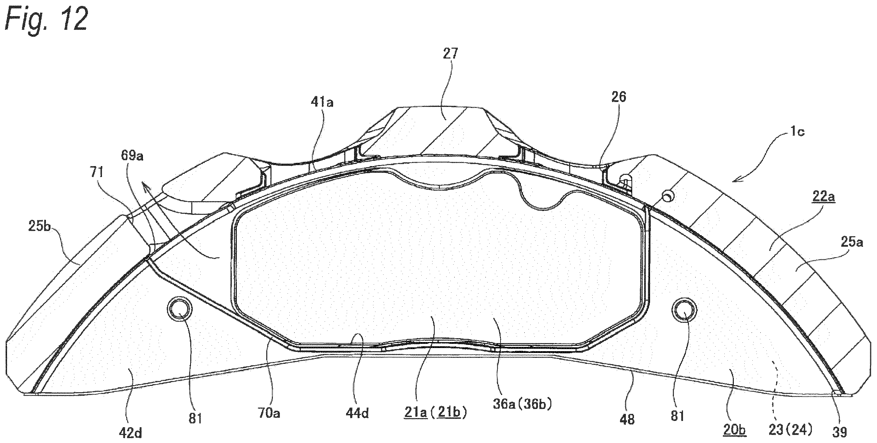

A third embodiment of the present invention will be described with reference to Fig. 12. A disc brake device 1c of the third embodiment is characterized in that a cover discharge port 69a configured to discharge abrasion powder in an abrasion powder scattering prevention cover 20b to the outside is provided on a radially outer end portion of the abrasion powder scattering prevention cover 20b, and has a support structure with respect to a caliper 22a.

In the third embodiment, a protrusion 70a having a substantially U shape is formed on an axially inner side surface of each of a pair of axial opposed walls 42d configuring the abrasion powder scattering prevention cover 20b at a portion which surrounds three sides of a pad insertion hole 44d excluding a radially outer side thereof. A portion of the protrusion 70a positioned on a rotation-out side of the pad insertion hole 44d is inclined in a direction away from the pad insertion hole 44d as going toward a radially outer side. In the third embodiment, the cover discharge port 69a penetrating in the radial direction is formed at a rotation-out side portion of a radially outer cover portion 41a configuring the abrasion powder scattering prevention cover 20b, and a rotation-out side end portion of the cover discharge port 69a is connected to a radially outer end portion of the protrusion 70a. The connection portion 25a of the caliper 22a inside which the abrasion powder scattering prevention cover 20b having the above configuration is arranged is formed with a caliper discharge port 71 penetrating in the radial direction, at a portion overlapping the cover discharge port 69a in the radial direction.

A radially inner cover portion 48 projecting toward an axially inner side is provided at a radially inner end portion (opening portion 39) of the abrasion powder scattering prevention cover 20b. The radially inner cover portion 48 covers an inner peripheral surface of the lining 36a (36b) from a radially inner side. The abrasion powder scattering prevention cover 20b is screwed and fixed to the caliper 22a with fixing screws inserted through mounting holes (not shown) provided at both circumferential end portions of the radially inner cover portion 48. Further, the axial opposite wall 42d is provided with fitting convex portions 81, 81 protruding axially outward at both circumferential side portions sandwiching the pad insertion hole 44d. The fitting convex portions 81, 81 are internally fitted and fixed to fitting concave portions provided at the axially inner side surfaces of the inner body portion 23 and the outer body portion 24, so that the abrasion powder scattering prevention cover 20b is positioned with respect to the caliper 22a.

In the third embodiment having the above-described configuration, abrasion powder generated at the slide-contact portion is moved along an inner side surface of the protrusion 70a (a passage which is a space partitioned by the inner side surface of the protrusion 70a is moved in an arrow direction), so that the abrasion powder can be efficiently introduced to the cover discharge port 69a and the caliper discharge port 71. Therefore, by connecting the tip end portion of the suction duct described in the first embodiment to the caliper discharge port 71, abrasion powder in the abrasion powder scattering prevention cover 20b can be effectively absorbed. Further, in the third embodiment, since the radially inner cover portion 48 is provided at the radially inner end portion of the abrasion powder scattering prevention cover 20b, the abrasion powder in the abrasion powder scattering prevention cover 20b can also be prevented from scattering radially inward from the abrasion powder scattering prevention cover 20b. Since it is unnecessary to provide the mounting flange portion as in the first embodiment, the protrusion amount of the abrasion powder scattering prevention cover 20b from the radially inner end portion of the caliper 22a can be suppressed.

Other configurations and operational effects are the same as those in the first and second embodiments.

### [Fourth Embodiment]

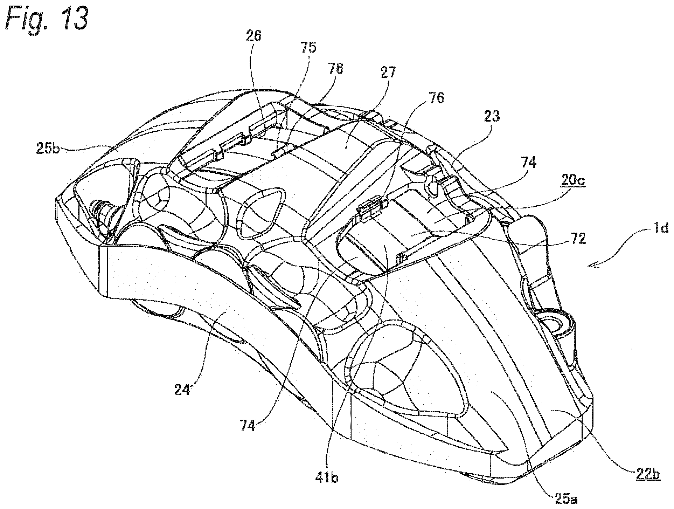

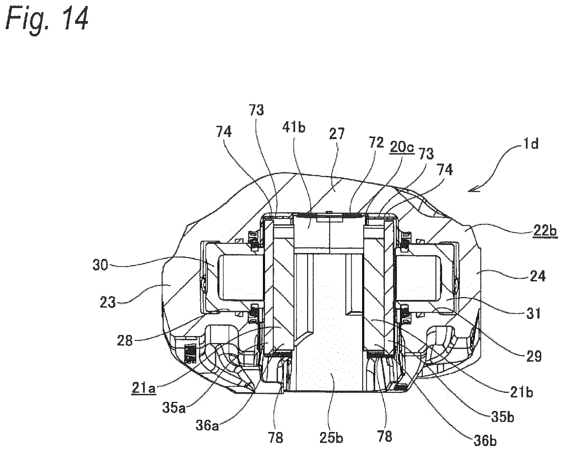

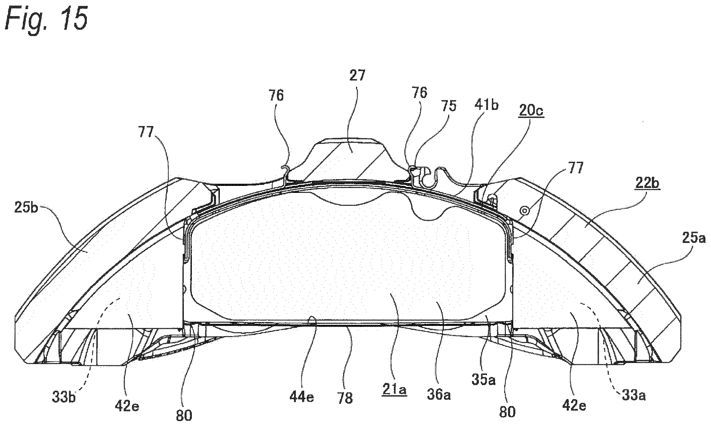

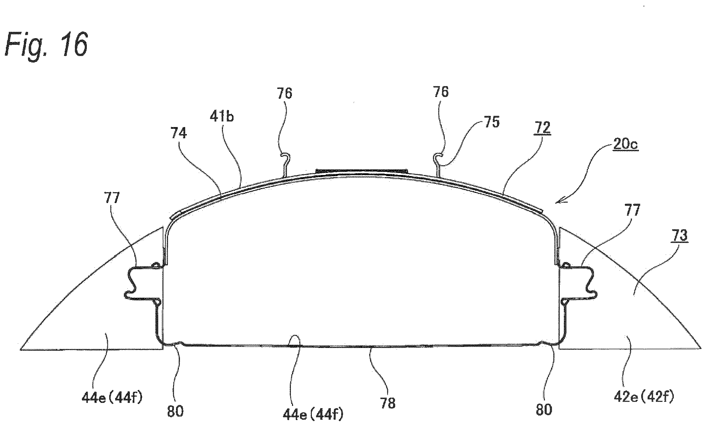

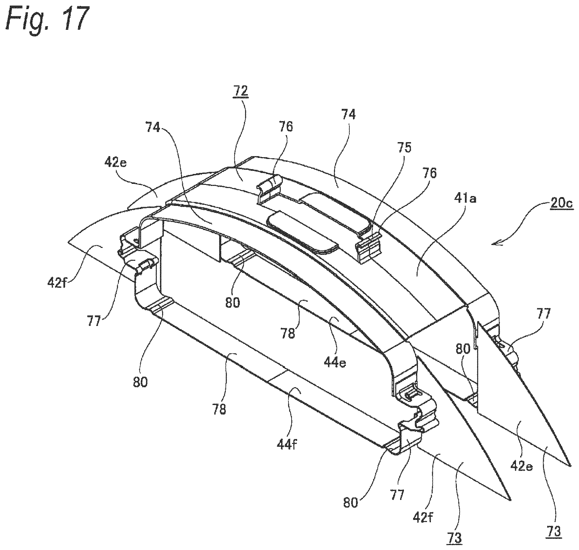

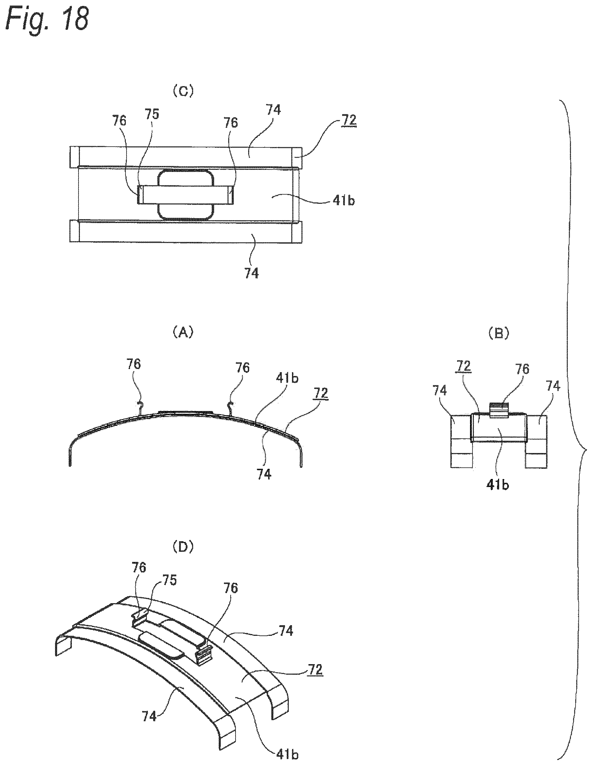

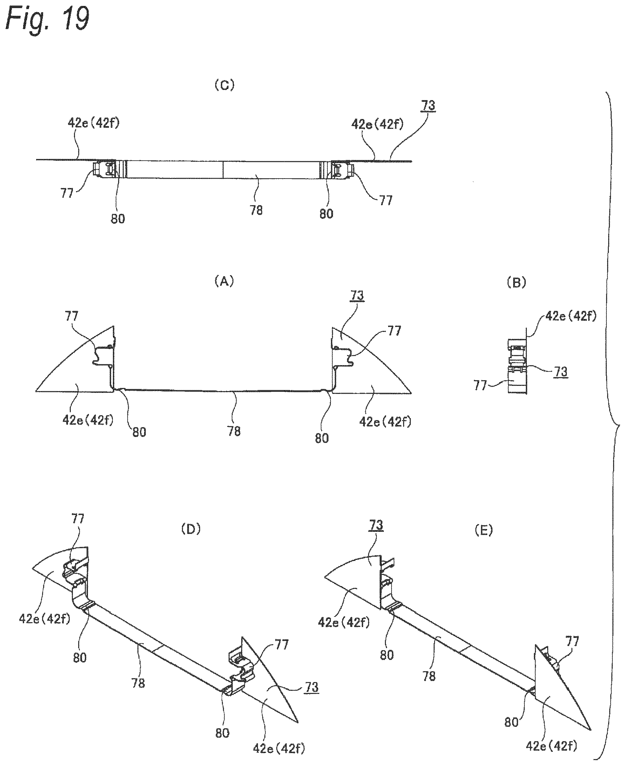

A fourth embodiment of the present invention will be described with reference to Figs. 13 to 19. A disc brake device 1d of the fourth embodiment is characterized in that an abrasion powder scattering prevention cover 20c has a urging function for elastically urging the inner pad 21a and the outer pad 21b. Incidentally, although a caliper 22b of the fourth embodiment and the caliper 22 of the first embodiment have different detailed shapes, since the basic configuration is the same, the same reference numerals are given to the same parts, and detail descriptions thereof are omitted.

In the fourth embodiment, the abrasion powder scattering prevention cover 20c includes a first element 72 having a function as a pad spring which presses the inner pad 21a and the outer pad 21b radially inward, and a pair of second elements 73, 73 having functions as pad clips which press both circumferential end portions of the inner pad 21a and the outer pad 21b radially outward.

The first element 72 is made of a metal plate having elasticity and corrosion resistance such as a stainless steel plate or the like, constitutes an outer peripheral surface of the abrasion powder scattering prevention cover 20c, and is arranged radially outward of the rotor 5 (refer to Fig. 1 or the like), the inner pad 21a, and the outer pad 21b. The first element 72 includes a radially outer cover portion 41b, a pair of first urging portions 74, 74, and a support portion 75.

The radially outer cover portion 41b is provided at an axially central portion of the first element 72, and is curved into a convex circular-arc shape along the outer peripheral surface of the rotor 5. The radially outer cover portion 41a is arranged along a circumferential central side portion of the pair of connection portions 25a, 25b and the inner peripheral surface of the central bridge portion 27 in a state where the first element 72 is fitted to the caliper 22b, and a clearance is provided between the radially outer cover portion 41a and the outer peripheral surface of the rotor 5.

The pair of first urging portions 74, 74 are portions that function as pad springs, are provided at both axial end portions of the first element 72, and are curved into convex circular-arc shapes along outer circumferential edge portions of the pressure plates 35a, 35b configuring the inner pad 21a and the outer pad 21b, respectively. Further, the pair of first urging portions 74, 74 respectively press the outer circumferential edge portions of the pressure plates 35a, 35b radially inward in the state where the first element 72 is fitted to the caliper 22b.

The support portion 75 includes a pair of circumferentially separated elastic arm portions 76, 76, and is provided at a circumferential central portion of an outer peripheral surface of the radially outer cover portion 41b. The pair of elastic arm portions 76, 76 is formed by forming a penetration hole in the circumferential central portion of the radially outer cover portion 41b, and cutting and raising both circumferential side portions of the penetration hole radially outward. Further, the first element 71 is supported and fixed to the caliper 22b by elastically clamping the central bridge portion 27 from both circumferential sides.

In contrast, the second elements 73, 73 are made of metal plates having elasticity and corrosion resistance such as a stainless steel plate or the like, constitute side surfaces of the abrasion powder scattering prevention cover 20c, and are arranged at both axial sides of the rotor 5. Each of the second elements 73, 73 includes a pair of axial opposed walls 42e, 42e (42f, 42f), a pair of clip portions 77, 77, and a connection portion 78.

The axial opposed walls 42e, 42e (42f, 42f) are respectively formed into a substantially quarter circle shape in a front view, and are arranged in a state of being separated in the circumferential direction. The pair of axial opposed walls 42e, 42e (42f, 42f) are respectively positioned at axially inner sides of the guide wall portions 33a, 33b in a state where the second elements 73, 73 are fitted to the caliper 22b.

The clip portions 77, 77 are portions that function as pad clips, are provided at axially outer sides of the axial opposed walls 42e, 42e (42f, 42f), and are clamped at portions (slide-contact portions) between the both circumferential side edge portions of each of the pressure plates 35a, 35b and the circumferential side surfaces of the guide wall portion 33a, 33b. Further, radially inner end portions of the both circumferential end portions of each of the pressure plates 35a, 35b are pressed radially outward by each of second urging portions 80, 80 which is provided at a radially inner end portion of each of the clip portions 77, 77. Each of the clip portions 77, 77 prevents portions (slide-contact portion) between the both circumferential side edge portions of each of the pressure plates 35a, 35b and the circumferential side surfaces of the guide wall portions 33a, 33b from rusting, and the occurrence of abrasion at the slide-contact portions is suppressed.

The connection portion 78 connects tip end portions of the pair of second urging portions 80, 80 configuring the second element 73 to each other in the circumferential direction, and is arranged in the circumferential direction along a radially inner end edge portion of each of the pressure plates 35a, 35b.

In the fourth embodiment, in a state where the first element 72 and the second elements 73, 73 are separately fitted to the caliper 22b, the abrasion powder scattering prevention cover 20c is configured by connecting the both circumferential end portions of each of the first urging portions 74, 74 configuring the first element 72 to radially outer end portions of the clip portions 77, 77 configuring each of the second elements 73, 73. The abrasion powder scattering prevention cover 20c has pad insertion holes 44e, 44f each of which is surrounded by the first urging portion 74, the clip portions 77, 77 and the connection portion 78, and has a shape matching the outline shape of each of the pressure plates 35a, 35b. Further, the pressure plates 35a, 35b are arranged inside the pad insertion holes 44e, 44f so as to be displaceable in the axial direction.

The abrasion powder scattering prevention cover 20c, in either of the non-braking case and the braking case, covers the circumferential central portion from a radially outer side and covers the both circumferential end portions from both axial sides at a portion positioned inside the caliper 22b of the rotor 5. The abrasion powder scattering prevention cover 20c covers outer peripheral surfaces of the linings 36a, 36b configuring the inner pad 21a and the outer pad 21b from the radially outer side in either of the non-braking case and the braking case.

In the disc brake device 1d of the fourth embodiment having the above-described configuration, by providing the abrasion powder scattering prevention cover 20c, not only abrasion powder can effectively be prevented from scattering to the surroundings, but also the inner pad 21a and the outer pad 21b are effectively prevented from rattling with respect to the caliper 22b. Therefore, postures of the inner pad 21a and the outer pad 21b can be stabilized at the time of non-braking, and the generation of an abnormal noise can be effectively suppressed. Further, as compared with the case where the pad spring and the pad clip are provided separately from the abrasion powder scattering prevention cover, cost can be reduced with reduction in the number of parts.

Other operational effects are the same as those in the first embodiment.

### [Fifth Embodiment]

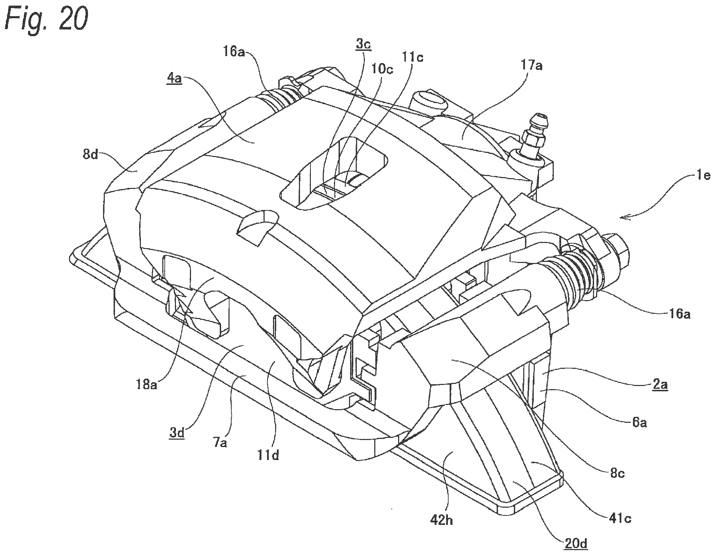

A fifth embodiment of the present invention will be described with reference to Figs. 20 to 22. The fifth embodiment is characterized in that an abrasion powder scattering prevention cover 20d is provided for a floating type disc brake device 1e.

The disc brake device 1e of the fifth embodiment includes a support 2a, a pair of pads 3c, 3d, and a caliper 4a.

The support 2a is configured such that an inner side portion 6a arranged at an inner side of the rotor 5 (refer to Fig. 1 or the like) rotating together with a vehicle wheel and an outer side portion 7a arranged at an outer side of the rotor 5 are connected by a pair of connecting arm portions 8c, 8d arranged at both circumferential end portions so as to straddle the rotor 5. The support 2a having the above configuration is fixed to a suspension device such as a knuckle by inserting a bolt (not shown) through a pair of mounting holes formed in a radially inner side portion of the inner side portion 6a.

The pair of pads 3c, 3d are configured by a lining 10c and pressure plates 11c, 11d, and are supported so as to be movable in the axial direction with respect to the support 2a in a state of facing the both axial side surfaces of the rotor 5, respectively. Therefore, both circumferential end portions of each of the pressure plates 11c, 11d are engaged with both circumferential end portions of the support 2a so as to be moveable in the axial direction.

The caliper 4a is supported to the support 2a so as to be displaceable in the axial direction. Therefore, a pair of guide pins provided at both circumferential end portions of the caliper 4a is inserted into a pair of guide holes provided in the connecting arm portions 8c, 8d configuring the support 2a so as to be slidable in the axial direction. Dustproof boots 16a, 16a are provided between outer peripheral surfaces of base end portions of the pair of guide pins and opening portions of the pair of guide holes. In a state of straddling the pair of pads 3c, 3d, the caliper 4a includes a cylinder portion 17a on the inner side and a pawl portion 18a on the outer side. A piston configured to press the pad 3c on the inner side against the inner side surface of the rotor 5 is fitted liquid-tightly in the cylinder portion 17a.

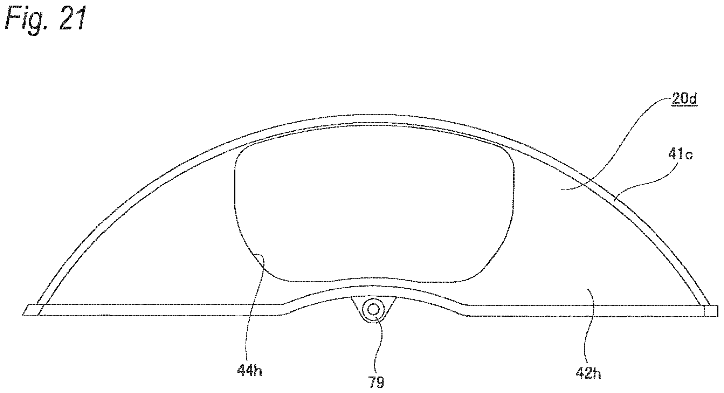

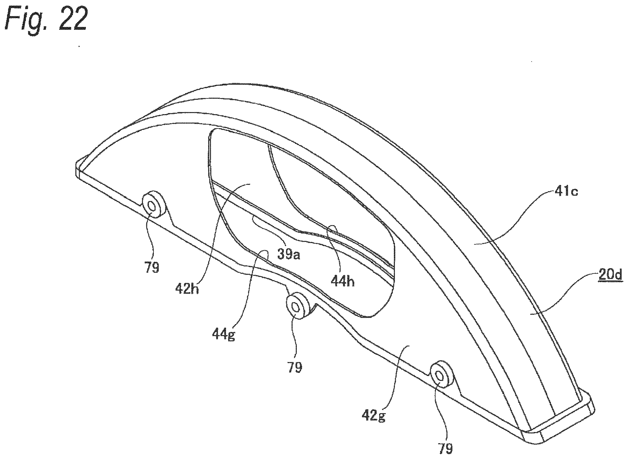

In particular, in the fifth embodiment, as shown in Figs. 21 and 22, the abrasion powder scattering prevention cover 20d is provided inside the caliper 4a having the above-described configuration. The abrasion powder scattering prevention cover 20d is made of a metal such as an aluminum alloy, and is formed into a hollow thin-walled bow shape (a semicylindrical shape) as a whole. The abrasion powder scattering prevention cover 20d includes an opening portion 39a having a rectangular shape on a radially inner end portion, and can accommodate a circumferential part (about one-third) of the sliding portion 5a of the rotor 5 through the opening portion 39.

The abrasion powder scattering prevention cover 20d includes a radially outer cover portion 41c, a pair of axial opposed walls 42g, 42h, and a plurality of mounting portions 79, 79 (three in the shown example). The mounting portions 79, 79 are provided at a radially inner end portion of the axial opposed wall 42g at the inner side of the pair of axial opposed walls 42g, 42h so as to be separated in the circumferential direction. In the fifth embodiment, the abrasion powder scattering prevention cover 20d having the above configuration is screwed and fixed to the support 2a with fixing screws inserted through the mounting portions 79, 79 in the axial direction. Further, in the state of being fixed to the support 2a, the abrasion powder scattering prevention cover 20d is arranged between the inner side portion 6a and the outer side portion 7a in the axial direction, and radially inward of the pair of connecting arm portions 8c, 8d. Pad insertion holes 44g, 44h through which the linings 10c can be inserted in the axial direction are provided at circumferential intermediate portions of the axial opposed walls 42g, 42h and portions axially facing axially inner end surfaces of the linings 10c configuring the inner pad 3c and the outer pad 3d.

In the fifth embodiment having the above-described configuration, the abrasion powder scattering prevention cover 20d supported and fixed to the support 2a and arranged inside the caliper 4a can prevent abrasion powder from scattering to the surroundings.

Other configurations and operational effects are the same as those in the first embodiment.

Here, characteristics of embodiments of the disc brake device according to the present invention described above are briefly summarized and listed below, respectively.
[1] A disc brake device (1a to 1e) including:
   a caliper (22, 4a) including at least one cylinder (inner cylinder 28 and outer cylinder 29, cylinder portion 17a) and arranged in a state of straddling a rotor (5) rotating together with a vehicle wheel;
   a piston (inner piston 30 and outer piston 31) fitted in the cylinder so as to be displaceable in an axial direction; and
   a pad (inner pad 21a, and outer pad 21b, 3c, and 3d) arranged in a state of facing an axial side surface of the rotor and pressed against the axial side surface of the rotor as the piston is pushed out,
   wherein an abrasion powder scattering prevention cover (20, 20a to 20d) configured to prevent abrasion powder generated along with sliding contact between the rotor and the pad from scattering is provided inside the caliper.
[2] The disc brake device (1a to 1e) according to the above [1], wherein the abrasion powder scattering prevention cover (20, 20a to 20d) covers at least a part of a periphery of the pad (inner pad 21a, and outer pad 21b, 3c, and 3d) at least at the time of braking.
[3] The disc brake device (1a to 1e) according to the above [2], wherein the abrasion powder scattering prevention cover (20, 20a to 20d) covers a peripheral surface of the pad (inner pad 21a, and outer pad 21b, 3c, and 3d).
[4] The disc brake device (1a to 1e) according to the above [3], wherein the abrasion powder scattering prevention cover (20, 20a to 20d) covers the rotor (5) from a radial outer side.
[5] The disc brake device (1a to 1e) according to any one of the above [1] to [4], wherein the abrasion powder scattering prevention cover (20, 20a to 20d) is also provided at a portion which is displaced from the pad (inner pad 21a, and outer pad 21b, 3c, and 3d) in a circumferential direction.
[6] The disc brake device (1a to 1e) according to any one of the above [1] to [5], wherein at least a part of the abrasion powder scattering prevention cover (20, 20a to 20d) is provided in a state of facing the axial side surface of the rotor (5).
[7] The disc brake device (1a to 1e) according to the above [6], wherein a space (clearance) is provided between the part (axial opposed walls 42a to 42h) of the abrasion powder scattering prevention cover (20, 20a to 20d) which faces the axial side surface of the rotor (5) and a portion (an axially inner side surface of each of the inner body portion 23 and the outer body portion 24) of the caliper (22) which is positioned on an opposite side to the rotor with the facing portion in the axial direction interposed.
[8] The disc brake device (1b, 1c) according to any one of the above [1] to [7], wherein the abrasion powder scattering prevention cover (20a, 20b) is provided with a discharge port (cover discharge port 69, 69a) configured to discharge the abrasion powder inside to the outside.
[9] The disc brake device (1d) according to any one of the above [1] to [8], wherein the abrasion powder scattering prevention cover (20c) elastically urges a part of the pad (inner pad 21a and outer pad 21b).
[10] The disc brake device (1d) according to any one of the above [1] to [9], wherein the abrasion powder scattering prevention cover (20c) is supported and fixed to a member (caliper 22b) that supports the pad (inner pad 21a and outer pad 21b) so that the pad (inner pad 21a and outer pad 21b) is movable in the axial direction.
[11] The disc brake device (1a to 1e) according to any one of the above [1] to [10], wherein the abrasion powder scattering prevention cover (20, 20a to 20d) is made of a material harmless to a human body.
[12] The disc brake device (1a) according to any one of the above [1] to [11], further including a suction device (50) configured to suck the abrasion powder and connected to the abrasion powder scattering prevention cover (20),
   wherein the suction device (50) includes a fan portion (51) which generates a suction force by negative pressure caused by rotating, and a drive portion (52) which rotationally drives the fan portion, and
   wherein the drive portion rotationally drives the fan portion by using rotation of a wheel configuring the vehicle wheel.
[13] The disc brake device (1a) according to the above [12], wherein the drive portion (52) includes a drive roller (62) rotated by an inner peripheral surface of the wheel, and a speed increasing mechanism (driven roller 63 and belt 64) for increasing the rotation of the drive roller and transmitting the rotation to the fan portion (51).

Incidentally, the present invention is not limited to the above-described embodiments, but may be appropriately modified, improved, or the like. Baterials, shapes, dimensions, numbers, arrangement places, or the like of the constituent elements in the above-described embodiments are arbitrary and not limited thereto as long as the present invention can be achieved.

In addition, the present application is based on a Japanese Patent Application No. 2016-115842 filed on June 10, 2016, contents of which are incorporated herein by reference.

### Industrial Applicability

In a state of implementing the present invention, the structures of the above-described embodiments can be implemented in combination as appropriate as long as there is no technical inconsistency. In the state of implementing the present invention, the lining (at least the axially inner end portion of the lining) configuring the pad can be arranged inside the abrasion powder scattering prevention cover not only at the time of braking but also at the time of non-braking.

### Description of Reference Numerals

1, 1a to 1e disc brake device
2, 2a support (a member for supporting the pad so as to be movable in the axial direction)
3a, 3b, 3c, 3d pad
4, 4a caliper
5 rotor
5a sliding portion
6, 6a inner side portion
7, 7a outer side portion
8a, 8b, 8c, 8d connecting arm portion
9 mounting hole
10a, 10b, 10c lining
11a, 11b, 11c, 11d pressure plate
12 locking protruding piece
13 torque receiving portion
14 guide pin
15 guide hole
16, 16a boot
17, 17a cylinder portion (cylinder)
18, 18a pawl portion
19 piston
20, 20a to 20d abrasion powder scattering prevention cover
21a inner pad (pad)
21b outer pad (pad)
22, 22a, 22b caliper (a member for supporting the pad so as to be movable in the axial direction)
23 inner body portion (portion positioned on an opposite side to the rotor)
24 outer body portion (portion positioned on an opposite side to the rotor)
25a, 25b connection portion
26 window portion
27 central bridge portion
28 inner cylinder (cylinder)
29 outer cylinder (cylinder)
30 inner piston (piston)
31 outer piston (piston)
32 mounting seat
33a, 33b guide wall portion
34a, 34b guide recessed groove
35a, 35b pressure plate
36a, 36b lining
37a, 37b ear portion
38 pad spring
39, 39a opening portion
40 accommodating space
41, 41a, 41b, 41c radially outer cover portion
42a to 42h axial opposed wall (portion facing the axial side surface of the rotor)
43 mounting flange portion
44a to 44h pad insertion hole
45, 45a mounting hole
46, 46a fixing screw
47a to 47d cover element
48 radially inner cover portion
49a, 49b coupling piece
50 suction device
51 fan portion
52 drive portion
53 suction duct
54 housing portion
55 support shaft
56 impeller
57 substrate portion
58 blade
59 housing suction port
60 housing discharge port
61 recovery portion
62 drive roller (speed increasing mechanism)
63 driven roller (speed increasing mechanism)
64 belt (speed increasing mechanism)
65 swing arm portion
66 expansion arm
67 spring
68 connection attachment
69, 69a cover discharge port
70, 70a protrusion
71 caliper discharge port
72 first element
73 second element
74 first urging portion
75 support portion
76 elastic arm portion
77 clip portion
78 connection portion
79 mounting portion
80 second urging portion

## Claims

1. A disc brake device comprising:
a caliper including at least one cylinder and arranged in a state of straddling a rotor rotating together with a vehicle wheel;
a piston fitted in the cylinder so as to be displaceable in an axial direction; and
a pad arranged in a state of facing an axial side surface of the rotor and pressed against the axial side surface of the rotor as the piston is pushed out,
wherein an abrasion powder scattering prevention cover configured to prevent abrasion powder generated along with sliding contact between the rotor and the pad from scattering is provided inside the caliper.

2. The disc brake device according to claim 1, wherein the abrasion powder scattering prevention cover covers at least a part of a periphery of the pad at least at the time of braking.

3. The disc brake device according to claim 2, wherein the abrasion powder scattering prevention cover covers a peripheral surface of the pad.

4. The disc brake device according to claim 3, wherein the abrasion powder scattering prevention cover covers the rotor from a radial outer side.

5. The disc brake device according to any one of claims 1 to 4, wherein the abrasion powder scattering prevention cover is also provided at a portion which is displaced from the pad in a circumferential direction.

6. The disc brake device according to any one of claims 1 to 5, wherein at least a part of the abrasion powder scattering prevention cover is provided in a state of facing the axial side surface of the rotor.

7. The disc brake device according to claim 6, wherein a space is provided between the part of the abrasion powder scattering prevention cover which faces the axial side surface of the rotor and a portion of the caliper which is positioned on an opposite side to the rotor with the facing portion in the axial direction interposed.

8. The disc brake device according to any one of claims 1 to 7, wherein the abrasion powder scattering prevention cover is provided with a discharge port configured to discharge the abrasion powder inside to the outside.

9. The disc brake device according to any one of claims 1 to 8, wherein the abrasion powder scattering prevention cover elastically urges a part of the pad.

10. The disc brake device according to any one of claims 1 to 9, wherein the abrasion powder scattering prevention cover is supported and fixed to a member that supports the pad so that the pad is movable in the axial direction.

11. The disc brake device according to any one of claims 1 to 10, wherein the abrasion powder scattering prevention cover is made of a material harmless to a human body.

12. The disc brake device according to any one of claims 1 to 11, further comprising a suction device configured to suck the abrasion powder and connected to the abrasion powder scattering prevention cover,
wherein the suction device includes a fan portion which generates a suction force by negative pressure caused by rotating, and a drive portion which rotationally drives the fan portion, and
wherein the drive portion rotationally drives the fan portion by using rotation of a wheel configuring the vehicle wheel.

13. The disc brake device according to claim 12, wherein the drive portion includes a drive roller rotated by an inner peripheral surface of the wheel, and a speed increasing mechanism for increasing the rotation of the drive roller and transmitting the rotation to the fan portion.
